# EUROPEAN PATENT APPLICATION

(11) **EP 2 098 960 A1**
(43) Date of publication of application: **09.09.2009**
(21) Application number: 07830848.3
(22) Date of filing: 30.10.2007
(51) Int. Cl.: G06F 12/00, G06F 13/00

(54) **DATA SYNCHRONIZING SYSTEM**

(30) Priority: 27.12.2006 JP 2006351645
(71) Applicant: Brother Kogyo Kabushiki Kaisha, Nagoya-shi, Aichi 467-8561 (JP)
(72) Inventor: SUGIURA, Masatoshi, Nagoya-shi Aichi 467-8561 (JP)
(74) Representative: Kuhnen & Wacker
(86) International application number: PCT/JP2007/071114
(87) International publication number: WO 2008/078450

(57) **Abstract**

A data synchronizing system is provided that, where an acquiring terminal is connected to providing terminals and acquires files therefrom, synchronizes the files between the providing terminals and the acquiring terminal. In the content display device, if a content file is modified, a history of the modification is recorded in a log file. A personal computer connects to the content display device, acquires the log file (S131) and repeats processing until all records in the log file have been processed (No: S133; S133-S141). First, a record is read (S134), and a content file is read from a content file storage area (S 135). Next, one record is added to an archive file (S138), and information stored before the content file update is stored in the archive file (S 139). Next, the content file is updated (S 140), and a command to delete the log file is transmitted to the content display device (S141).

## Description

### Technical Field

The present invention relates to a data synchronizing system, an acquiring terminal, a providing terminal, an acquisition program, and a provision program, specifically to a data synchronizing system that includes a providing terminal that stores a file that contains a plurality of data items and an acquiring terminal that connects to the providing terminal and acquires the file from the connected providing terminal, the present invention also relating to the acquiring terminal, the providing terminal, the acquisition program, and the provision program in the data synchronizing system.

### Background Art

Technologies are known in which a file (content) that is stored in a certain terminal (a providing terminal) is downloaded to another terminal (an acquiring terminal) and used. For example, content that is stored in a personal computer (the providing terminal) is downloaded to a mobile terminal (the acquiring terminal), where the content is viewed. In this example, in a case where a file of information that pertains to the content (date and time viewed, evaluation information for the content, and the like) is available, synchronization between the providing terminal and the acquiring terminal is required with regard to the file. Examples of proposed methods of data synchronizing between different terminals include a schedule data management method (refer to Patent Document 1) in a distributed environment in which synchronizing of data is performed between terminal systems, and an information processing method (refer to Patent Document 2) that performs synchronization processing between information processing devices.
Patent Document 1: Japanese Laid-Open Patent Publication No. 2000-132603
Patent Document 2: Japanese Laid-Open Patent Publication No. 9-6693

However, the schedule data management method that is an invention described in Patent Document 1 and the information processing method that is an invention described in Patent Document 2 present a problem in that only synchronization processing between two terminals, that is, synchronization processing in a one-to-one relationship is considered, and a many-to-one relationship or a many-to-many relationship that may occur when a plurality of providing terminals exists is not considered. In a case where the plurality of the providing terminals exists, each of the providing terminals needs to determine which content among the content stored in the acquiring terminal is content that the providing terminal in question provided. However, in order to do that, each of the providing terminals needs to determine whether the terminal in question provided the content with respect to all of the content stored in the acquiring terminal by comparing all of the files in the providing terminal to all of the files in the acquiring terminal. Moreover, in order to determine whether a file requires synchronizing, the data in all of the files also need to be compared, which may present a problem in that it increases an amount of processing for the providing terminal.

### Disclosure of the Invention

The present disclosure addresses the problems described above and provides a data synchronizing system, an acquiring terminal, a providing terminal, an acquisition program, and a provision program that, in a case where one acquiring terminal connects to a plurality of the providing terminals and acquires files from the providing terminals, are capable of easily synchronizing the data in the files between the providing terminals and the acquiring terminal.

According to the present disclosure, there is provided a data synchronizing system that includes providing terminals and an acquiring terminal, the providing terminals storing files that each include data items and the acquiring terminal being connected to the providing terminals and acquiring the files stored in the providing terminals, the data synchronizing system being characterized by synchronizing the data items in each of the files between the providing terminals and the acquiring terminal. The acquiring terminal includes first connecting means for connecting to the providing terminals, acquiring means for acquiring the files from the providing terminals to which the acquiring terminal is connected by the first connecting means, first file storing means for storing the files that the acquiring means has acquired, data modify command means for issuing a command to modify a data item in one of the files stored in the first file storing means, first data modifying means for modifying the data item in one of the files stored in the first file storing means, based on the modify command from the data modify command means, and modification history storing means for storing modification histories of the modifications of the data items that have been made by the first data modifying means in such a state that acquisition source providing terminals are identifiable, the acquisition source providing terminals being acquisition sources of the respective files stored in the first file storing means. Each of the providing terminals includes second connecting means for connecting to the acquiring terminal, second file storing means for storing the files, file history acquiring means for acquiring at least a corresponding file history from among the modification histories stored in the modification history storing means, when the providing terminal is connected to the acquiring terminal by the second connecting means, the corresponding file history being a modification history for the file for which the acquisition source providing terminal is the providing terminal, and second data modifying means for modifying the data item in the file stored in the second file storing means, based on the corresponding file history that has been acquired by the corresponding file history acquiring means.

Further, according to the present disclosure, there is provided an acquisition terminal that connects to providing terminals and acquires files from the providing terminals, the providing terminals each storing files that each include data items. The acquiring terminal includes first connecting means for connecting to the providing terminals, acquiring means for acquiring the files stored in the providing terminals to which the acquiring terminal is connected by the first connecting means, first file storing means for storing the files that the acquiring means has acquired, data modify command means for issuing a command to modify a data item in one of the files stored in the first file storing means, first data modifying means for modifying the data item in one of the files stored in the first file storing means, based on the modify command from the data modify command means, and modification history storing means for storing, as modification histories, histories of modifications that have each been made by the first data modifying means in the data item in the file stored in the first file storing means, wherein each of the modification histories stored in the modification history storing means is configured such that an acquisition source providing terminal is identifiable, the acquisition source providing terminal being an acquisition source of the file.

In addition, according to the present disclosure, an acquisition program is provided that causes a computer to function as each of the processing means of the acquiring terminal.

Furthermore, according to the present disclosure, there is provided providing terminals that each stores files to be provided to a connected terminal, the files each including data items, wherein an acquiring terminal includes modification history storing means for storing histories of modifications that have each been made to a file that has been provided by one of the providing terminals as modification histories that are configured such that an acquisition source providing terminals for the respective modification histories are identifiable, the acquiring terminal being a terminal that connects to the providing terminals and that acquires the files, the acquisition source providing terminals being acquisition sources of the respective files, and each of the providing terminals includes second connecting means for connecting to the acquiring terminal, second file storing means for storing the files to be provided to the acquiring terminal, corresponding file history acquiring means for acquiring at least a corresponding file history from among the modification histories stored in the modification history storing means, when the providing terminal is connected to the acquiring terminal by the second connecting means, the corresponding file history being a modification history for the file for which the acquisition source providing terminal is the providing terminal, and second data modifying means for modifying the data item in the file stored in the second file storing means, based on the corresponding file history that has been acquired by the corresponding file history acquiring means.

In addition, according to the present disclosure, a provision program is provided that causes a computer to function as each of the processing means of the providing terminal.

### Brief Description of the Drawings

FIG. 1 is a front view of a content display device 1.
FIG. 2 is a block diagram that shows an electrical configuration of the content display device 1.
FIG. 3 is a block diagram that shows an electrical configuration of a PC 9.
FIG. 4 is a schematic figure that shows a configuration of a content file storage area 141 of a flash memory 14.
FIG. 5 is a schematic figure that shows a configuration of an acquisition source PC information storage area 142.
FIG. 6 is a schematic figure that shows a configuration of a log file storage area 143.
FIG. 7 is a flowchart of display device processing.
FIG. 8 is a flowchart of log file creation processing that is performed during the display device processing.
FIG. 9 is a flowchart of synchronization processing that is performed by the PC 9.
FIG. 10 is a flowchart of synchronization processing in a second embodiment.
FIG. 11 is a flowchart of other processing in the display device processing (FIG. 7, S16).
FIG. 12 is a flowchart of synchronization processing in a third embodiment.
FIG. 13 is a flowchart of undo processing that is performed by the PC 9.
FIG. 14 is a flowchart of the other processing in the display device processing (FIG. 7, S16).
FIG. 15 is a schematic figure that shows a configuration of a log file in a fourth embodiment.
FIG. 16 is a flowchart of log file creation processing in the fourth embodiment.
FIG. 17 is a flowchart of synchronization processing in the fourth embodiment. Best Mode for Carrying Out the Invention

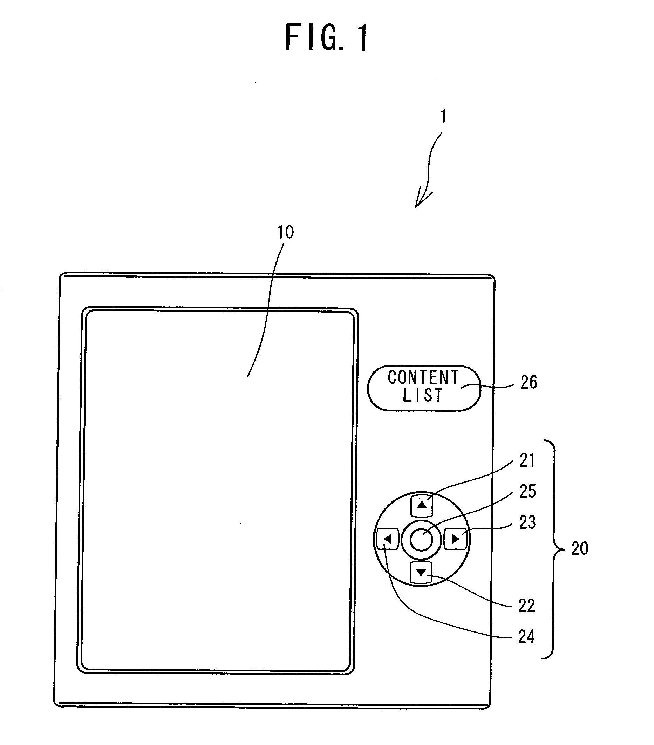

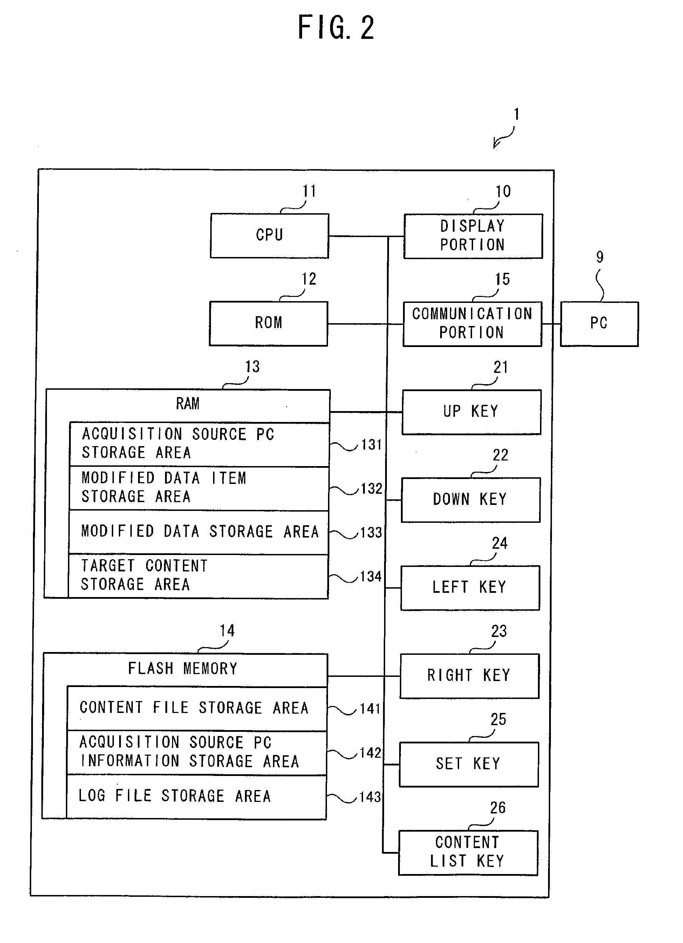

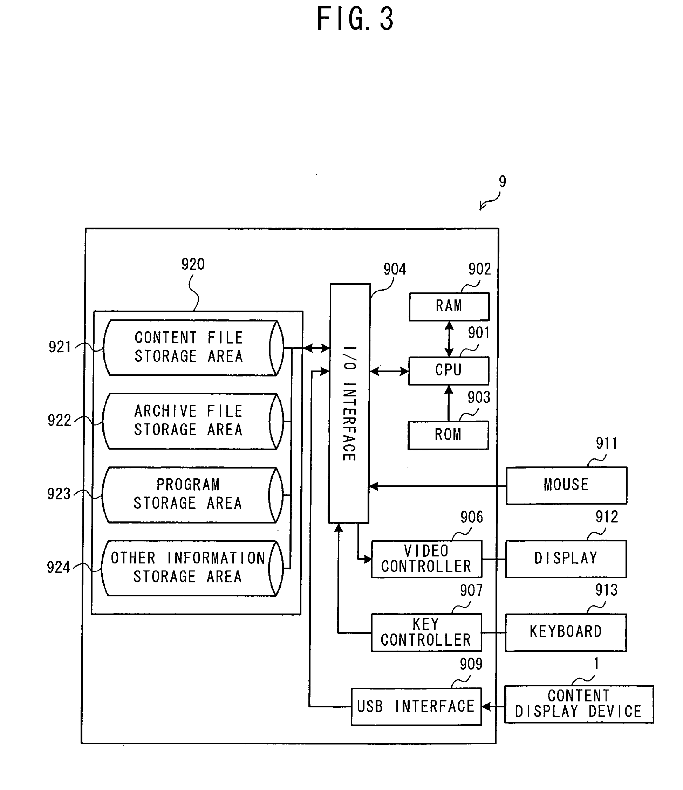

Hereinafter, a first embodiment to a fourth embodiment of the present disclosure will be explained with reference to the drawings. First, an external appearance and a main operation of a content display device 1 that corresponds to an acquiring terminal in the first embodiment to the fourth embodiment will be explained with reference to FIG. 1. As shown in FIG. 1, the content display device 1 has a roughly rectangular shape and is provided with a display portion 10 on a front face. Although not shown in FIG. 1, on a right side face, the content display device 1 is provided with a port for connecting a cable that connects to a personal computer 9 (hereinafter called the PC 9; refer to FIG. 3) that corresponds to a providing terminal. In the content display device 1, content that is acquired from the PC 9 can be stored in a flash memory 14 (refer to FIG. 2) and displayed in the display portion 10. The content display device 1 is capable of acquiring content from a plurality of the PCs 9. Note that in the first embodiment to the fourth embodiment, the content is document data that contains text characters and/or a still image.

To the right of the display portion 10, an operation portion 20 is provided. A Set key 25 is provided in the operation portion 20. An Up key 21, a Down key 22, a Left key 24, and a Right key 23 are respectively provided above, below, to the left of, and to the right of the Set key 25. In addition, a Content List key 26 is provided above the Set key 25, the Up key 21, the Down key 22, the Left key 24, and the Right key 23. The Content List key 26 is a key for displaying a content list screen, the Up key 21 and the Down key 22 are keys for selecting content on the content list screen and a menu screen, and the Left key 24 and the Right key 23 are keys for performing page-turning of the content that is displayed.

Operations such as viewing of the content stored in the flash memory 14 and the like may be performed by operating the keys 21 to 26. Specifically, selecting the Content List key 26 causes the content list screen (not shown in the drawings), which shows a list of the content stored in the flash memory 14, to be displayed in the display portion 10. Operating the Up key 21 and the Down key 22 makes it possible to select content by moving a cursor on the content list screen. Selecting the Set key 25 causes the content selected by the cursor to be set as displayed content and displayed in the display portion 10. When the content is being displayed in the display portion 10, selecting the Left key 24 causes a next page of the content to be displayed, and selecting the Right key 23 causes a preceding page of the content to be displayed.

The content display device 1 also has a function to assign an evaluation (a score) to the displayed content. A numerical value from 1 to 10 may be assigned as the evaluation (the score), with a higher number indicating a higher evaluation. The content display device 1 also has a tagging function such that the content display device 1 can store, as a tagged page, a page that a user wants to mark.

Selecting the Set key 25 when the content is being displayed in the display portion 10 causes a selection screen for a score menu and a tagging menu to be displayed. Operating the Up key 21 and the Down key 22 makes it possible to select a menu by moving a cursor on the menu selection screen. Selecting the Set key 25 causes the menu that is selected by the cursor to be selected, and in a case where the score menu is selected, a score input screen by which a score can be input is displayed. On the score input screen, a numerical value from 1 to 10 can be selected from a list box, the numerical value being selected by operating the Up key 21 and the Down key 22 to move a cursor, and selecting the Set key 25 causes the selected numerical value to be stored as the score. In a case where the tagging menu is selected, the page that is being displayed is stored as a tagged page. Note that in the first embodiment to the fourth embodiment, in addition to the information on the score and the tagging, information on a displayed date and time, which is the date and time when the content was first viewed, and a bookmarked page, which is a page that is open when the content is closed, is stored along with the content, as attribute information.

Next, an electrical configuration of the content display device 1 will be explained with reference to FIG. 2. As shown in FIG. 2, a CPU 11, a ROM 12, a RAM 13, and the flash memory 14 are provided in the content display device 1. The CPU 11 performs control of the content display device 1 in the content display device 1. The ROM 12 stores an acquisition program and the like, the RAM 13 stores various types of data temporarily, and the flash memory 14 is a non-volatile memory that stores various types of data. The display portion 10 that displays an image (refer to FIG. 1) is also provided in the content display device 1. A communication portion 15 is also provided for connecting to the PC 9. The Up key 21, the Down key 22, the Left key 24, and the Right key 23, the Set key 25, and the Content List key 26 are also provided in the content display device 1 (refer to FIG. 1). The ROM 12, the RAM 13, the flash memory 14, the display portion 10, the communication portion 15, the Up key 21, the Down key 22, the Left key 24, the Right key 23, the Set key 25, and the Content List key 26 are connected to the CPU 11 through a bus.

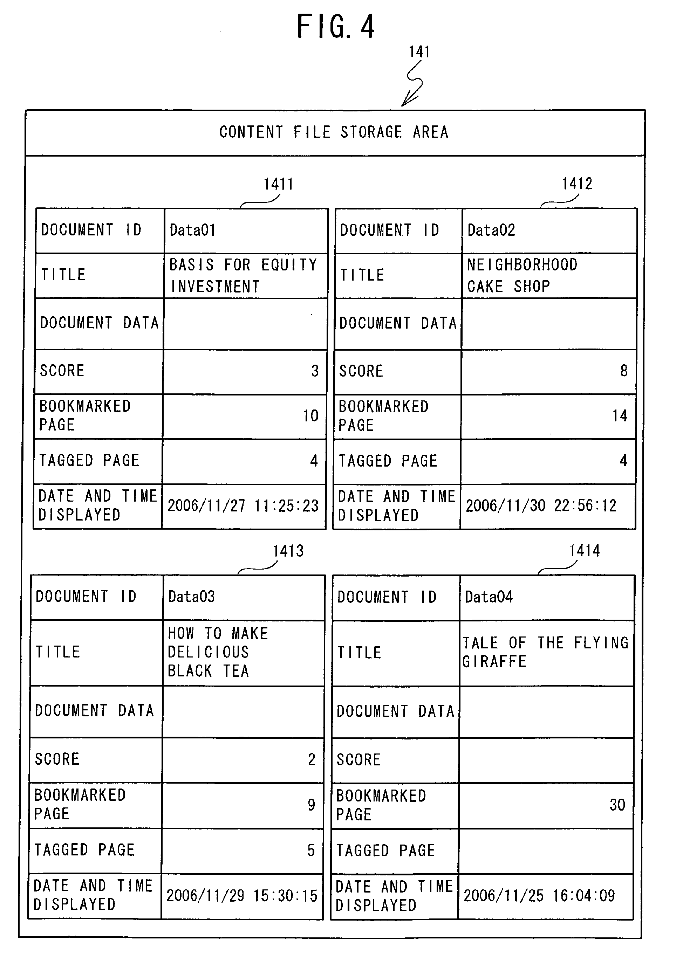

Note that an acquisition source PC storage area 131, a modified data item storage area 132, a modified data storage area 133, a target content storage area 134, and the like are provided in the RAM 13. Note that other storage areas that are not shown in the drawings are also provided in the RAM 13. When attribute information included in a content file is modified, information that indicates the PC from which the content file that includes the attribute information was acquired is stored in the acquisition source PC storage area 131. Information that indicates a data item for which the attribute information was modified is stored in the modified data item storage area 132. The modified data in the data item for which the attribute information was modified is stored in the modified data storage area 133. Information (a document ID) for identifying the content file (the target content) for which the attribute information was modified is stored in the target content storage area 134. Further, a content file storage area 141, an acquisition source PC information storage area 142, a log file storage area 143, and the like are provided in the flash memory 14. Note that other storage areas that are not shown in the drawings are also provided in the flash memory 14. The storage areas in the flash memory 14 will be explained later with reference to FIGS. 4 to 6.

Next, an electrical configuration of the PC 9 will be explained with reference to FIG. 3. The PC 9 is what is called a personal computer and is a general-purpose type of device. As shown in FIG. 3, the PC 9 is provided with a CPU 901 that performs control of the PC 9. A RAM 902 that stores various types of data temporarily, a ROM 903 that stores a BIOS and the like, and an I/O interface 904 that performs mediation of data transfers are connected to the CPU 901. A hard disk unit 920 is connected to the I/O interface 904. At least a content file storage area 921, an archive file storage area 922, a program storage area 923, and an other information storage area 924 are provided in the hard disk unit 920.

Note that a content file transmitted to the content display device 1 is stored in the content file storage area 921. The content file includes the above-described attribute information and information for identifying the content, in addition to the data that make up the content that is displayed by the content display device 1. An archive file that is information for undoing a change that has been made to information in the content file is stored in the archive file storage area 922. Note that the archive file is used only in the third embodiment. A provision program that is executed by the CPU 901 is stored in the program storage area 923, and other information that is used by the PC 9 is stored in the other information storage area 924.

A mouse 911, a video controller 906, a key controller 907, and a USB interface 909, are also connected to the I/O interface 904. A display 912 is connected to the video controller 906, and a keyboard 913 is connected to the key controller 907. The content display device 1 can be connected to the USB interface 909 using a USB cable.

According to the content display device 1 and the PC 9 of the present disclosure, in a case where the attribute information is modified in the content display device 1, a log file is created. In the first embodiment to the third embodiment, a log file is created in the content display device 1 for each PC (acquisition source PC) from which content is acquired. In the first embodiment, when the PC 9 is connected to the content display device 1, the PC 9 acquires the corresponding log file and updates the attribute information in a content file of the PC 9. In the second embodiment, when the PC 9 is connected to the content display device 1, the PC 9 acquires the corresponding log file, updates the attribute information in the content file of the PC 9, and issues a command to the content display device 1 to delete the log file. The log file in question is then deleted from the content display device 1 in accordance with the delete command. In the third embodiment, when the PC 9 is connected to the content display device 1, the PC 9 acquires the corresponding log file, updates the attribute information in the content file of the PC 9, and issues a command to the content display device 1 to delete the log file. In the third embodiment, undo processing may be performed. Specifically, after the attribute information is updated, the updated information may be restored to its prior state. In order to do this, the archive file for restoring the updated attribute information to its prior state is created. In the fourth embodiment, a single log file is created in the content display device 1, instead of creating one log file for each acquisition source PC. Information that identifies the acquisition source PC is included as a data item in the log file. Then, when the PC 9 is connected to the content display device 1, the PC 9 acquires the log file and updates the attribute information in the content file of the PC 9.

Next, the first embodiment will be explained with reference to FIGS. 4 to 9. In the first embodiment, when the PC 9 is connected to the content display device 1, the PC 9 acquires the corresponding log file and updates the attribute information in the content file of the PC 9. First, the storage areas that are provided in the flash memory 14 will be explained.

As shown in FIG. 4, the content files are stored as separate files in the content file storage area 141. The content files each contain data items that are hereinafter described. The data items include a document ID for identifying the content file, a title that indicates a title of the content, document data that are the data that make up the content itself, and the score that is the information that indicates the evaluation of the content by a viewer. The data items also include the bookmarked page that indicates the last page of the content that was displayed, the tagged page that indicates the page of the content that has been designated as the tagged page, and the date and time displayed that indicates the date and time when the content was first viewed.

In the example shown in FIG. 4, four content files 1411 to 1414 are stored in the content file storage area 141. For the content file 1411, the document ID is "Data01", the title is "Basis for Equity Investment", and an illustration of the document data is omitted in FIG. 4. In addition, the score is "3", the bookmarked page is page 10, the tagged page is page 4, and the date and time displayed is "2006/11/27 11:25:23". For the content file 1412, the document ID is "Data02", the title is "Neighborhood Cake Shop", and an illustration of the document data is omitted in FIG. 4. In addition, the score is "8", the bookmarked page is page 14, the tagged page is page 4, and the date and time displayed is "2006/11/30 22:56:12". For the content file 1413, the document ID is "Data03", the title is "How to Make Delicious Black Tea", and an illustration of the document data is omitted in FIG. 4. In addition, the score is "2", the bookmarked page is page 9, the tagged page is page 5, and the date and time displayed is "2006/11/29 15:30:15". For the content file 1414, the document ID is "Data04", the title is "Tale of the Flying Giraffe", and an illustration of the document data is omitted in FIG. 4. In addition, the score is not set, the bookmarked page is page 30, the tagged page is not set, and the date and time displayed is "2006/11/25 16:04:09".

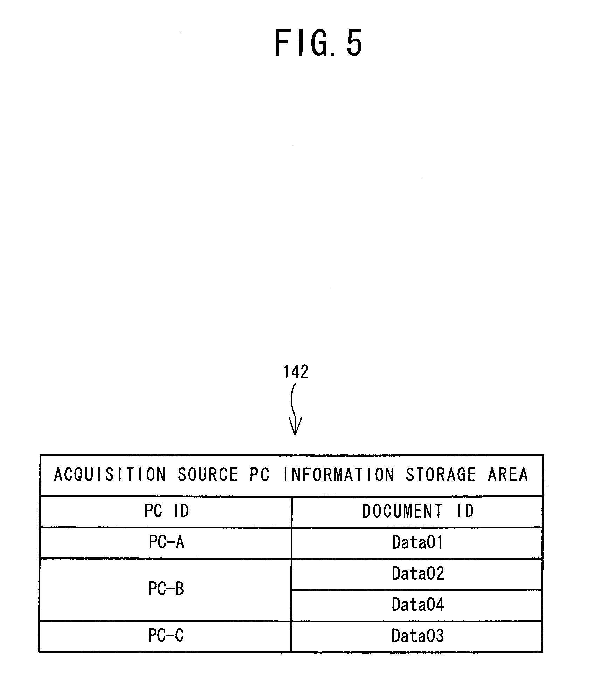

As shown in FIG. 5, a PC ID and a document ID are stored as data items in the acquisition source PC information storage area 142. Identification information for identifying the acquisition source PC is stored in the PC ID data item, and information for identifying the content acquired from the PC is stored in the document ID data item in correspondence to the PC ID. In the example shown in FIG. 5, the content called "Data01" has been acquired from the PC 9 with the identification information "PC-A". In addition, the contents called "Data02" and "Data04" have been acquired from the PC 9 with the identification information "PC-B". The content called "Data03" has been acquired from the PC 9 with the identification information "PC-C".

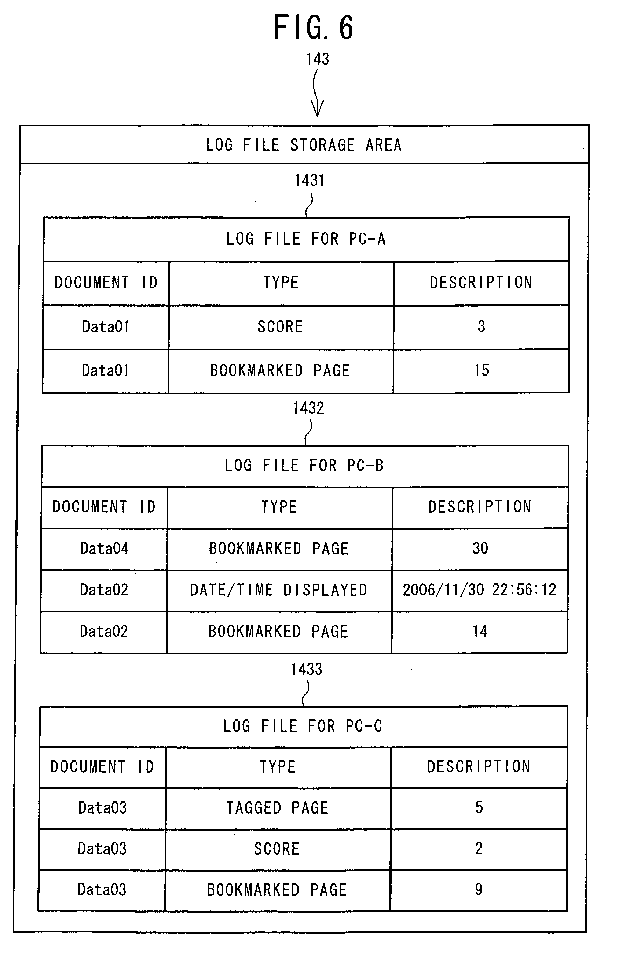

As shown in FIG. 6, one log file for each of the acquisition source PCs is stored in the log file storage area 143. In the example shown in FIG. 6, three log files for PC-A, PC-B, and PC-C are stored in the log file storage area 143. The data items in each of the log files include a document ID for identifying the content, a type in which is stored a value that indicates a data item of an attribute information that has been modified, and a description in which is stored a value of the modified attribute information. Further, in order to identify the PC to which the log file corresponds, a PC ID that is identification information for identifying the PC is used in a file name for the log file.

In the example that is shown in FIG. 6, a modification history that indicates that the score for the document ID "Data01" was changed to "3" and a modification history that indicates that the bookmarked page for the document ID "Data01" was changed to "10" are stored in a log file for PC-A 1431. In addition, a modification history that indicates that the bookmarked page for the document ID "Data04" was changed to "30", a modification history that indicates that the date and time displayed for the document ID "Data02" was changed to "2006/11/30 22:56:12", and a modification history that indicates that the bookmarked page for the document ID "Data02" was changed to "14" are stored in a log file for PC-B 1432. A modification history that indicates that the tagged page for the document ID "Data03" was changed to "5", a modification history that indicates that the score for the document ID "Data03" was changed to "2", and a modification history that indicates that the bookmarked page for the document ID "Data03" was changed to "9" are stored in a log file for PC-C 1433.

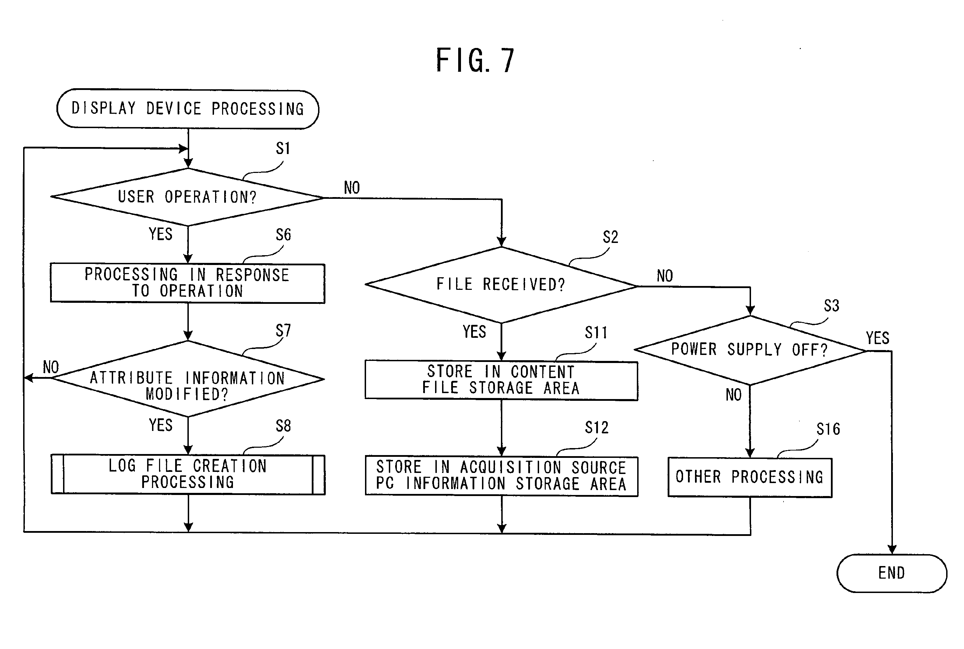

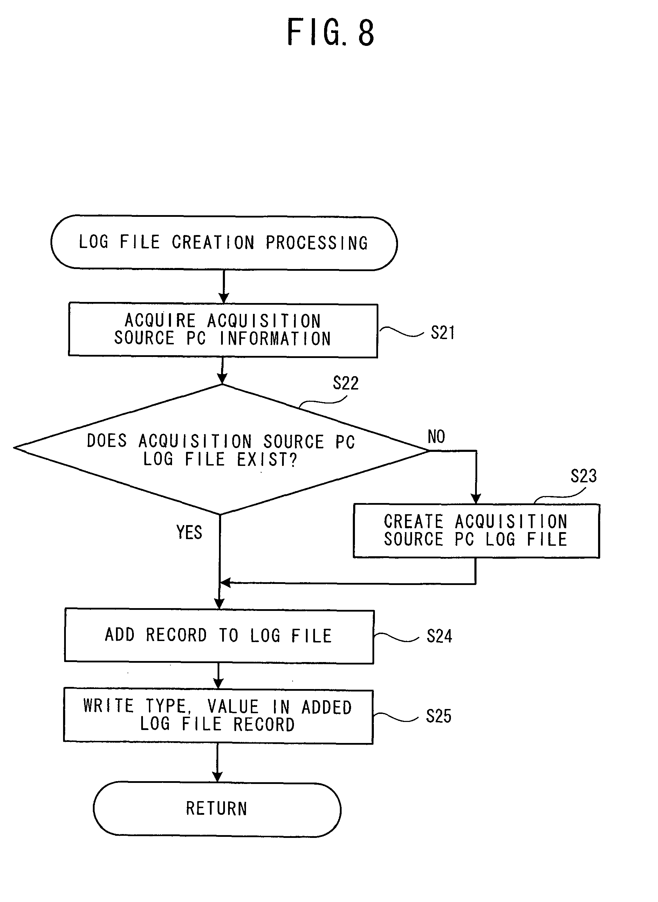

Next, display device processing that is performed by the content display device 1 will be explained with reference to flowcharts that are shown in FIGS. 7 and 8.

The display device processing that is shown in FIG. 7 is performed after the power supply to the content display device 1 is turned on and initialization processing such as operation checking and the like is performed. First, a determination is made as to whether an operation has been performed by the user (S1). This can be determined by determining whether one of the Content List key 26, the Set key 25, the Up key 21, the Down key 22, the Left key 24, and the Right key 23 has been operated. If one of the keys 21 to 26 has been operated (YES at S1), then processing is performed at that time in response to the key operation (S6). This is processing in response to a cursor movement by one of the Up key 21 and the Down key 22, a display of the content list screen by the operation of the Content List key 26, a setting of a selected item by the Set key 25, or the like. For example, the menu selection screen may be displayed by the selecting of the Set key 25 when the content is being displayed in the display portion 10. The cursor may be moved between the score menu and the tagging menu by the operating of one of the Up key 21 and the Down key 22 while the menu selection screen is being displayed. In addition, a menu selection may be made by the selecting of the Set key 25 while the menu selection screen is being displayed. Processing may be performed that displays the score input screen in a case where the score menu is selected, and the numerical value for the score may be selected by the operating of one of the Up key 21 and the Down key 22 on the score input screen.

Processing that is related to the main part of the present disclosure is processing in which the attribute information is changed. Four types of processing described below can be cited as processing in which the attribute information is changed. (1) Processing that, in a case where the tagging menu is selected by the selecting of the Set key 25 on the menu selection screen, stores a numerical value that indicates the displayed page in the tagged page data item in the content file for the content that is being displayed. (2) Processing that, when the Set key 25 is selected, stores a selected numerical value in the score data item in the content file for the content that is being displayed.

(3) Processing that is performed when the Set key 25 is selected on the content list screen. Specifically, in conjunction with the performing of the processing that displays the content in the display portion 10, a determination is made as to whether the content is being displayed for the first time. If the content is being displayed for the first time, processing is performed that stores the current date and time in the date and time displayed data item in the content file. Note that the determination as to whether the content is being displayed for the first time is made by determining whether a date and time are stored in the date and time displayed data item in the content file. (4) Processing that, in conjunction with the performing of the processing that turns the displayed page when one of the Left key 24 and the Right key 23 is operated when the content is being displayed in the display portion 10, stores the page to be displayed in the bookmarked page data item of the content file. Note that when the attribute information is modified, information that indicates the modified data item is stored in the modified data item storage area 132 of the RAM 13. The value in the data item after modification is stored in the modified data storage area 133. The document ID for the content file that contains the modified attribute information is stored in the target content storage area 134.

After the processing is performed in response to the operation (S6), a determination is made as to whether the attribute information has been modified (S7). The determination as to whether the attribute information has been modified is made by determining whether the user operation was an operation that modifies the attribute information. An operation that modifies the attribute information is one of the four operations described above. In a case where the operation was one that modifies the attribute information and the attribute information has been modified (YES at S7), log file creation processing is performed (S8, refer to FIG. 8). Note that in a case where the operation was not one that modifies the attribute information and the attribute information has not been modified (NO at S7), the processing returns to step S1.

Next, the log file creation processing will be explained with reference to FIG. 8. As shown in FIG. 8, in the log file creation processing, first the information about which PC is the acquisition source PC is acquired from the acquisition source PC information storage area 142 and stored in the acquisition source PC storage area 131 of the RAM 13 (S21). Specifically, the document ID for the content that is the target of the operation command is used to search among the document IDs in the acquisition source PC information storage area 142, and when the document ID is found, the PC ID that is stored in correspondence with the document ID is read. For example, if the target content is "Data02", in the example is FIG. 5, "PC-B" is read.

Next, a determination is made as to whether the log file for the acquisition source PC exists in the log file storage area 143 (S22). If the log file for the acquisition source PC does not exist in the log file storage area 143 (NO at S22), the log file for the acquisition source PC is newly created in the log file storage area 143 (S23). If the log file for the acquisition source PC does exist in the log file storage area 143 (YES at S22), the existing log file can be used, so there is no need to create a new log file, and a new log file is not created.

Next, one record is added to the log file for the acquisition source PC (S24), the document ID that is stored in the target content storage area 134 is stored in the document ID data item of the added record, information that indicates the data item that has been stored in the modified data item storage area 132 is stored in the type data item of the added record, and the information that is stored in the modified data storage area 133 is stored in the description data item of the added record (S25). Then, the log file creation processing ends, and the processing returns to the display device processing.

In the display device processing, as shown in FIG. 7, if a user operation has not been performed (NO at S1), a determination is made as to whether a content file has been received from the PC 9 (S2). If a content file has been received from the PC 9 (YES at S2), the received content file is stored in the content file storage area 141 (S11). Then a record is added to the acquisition source PC information storage area 142, and the ID of the connected PC 9 is stored in the PC ID, while the document ID of the acquired content file is stored in the document ID (S 12). The processing then returns to step S 1.

In a case where the content file has not been received from the PC 9 (NO at S2), a determination is made as to whether the command has been issued to turn off the power supply (S3) If the command to turn off the power supply has not been issued (NO at S3), other processing is performed (S16), and the processing returns to step S1. If the command to turn off the power supply has been issued (YES at S3), the display device processing ends. After processing is performed to turn off the power supply, the power supply for the content display device 1 is turned off.

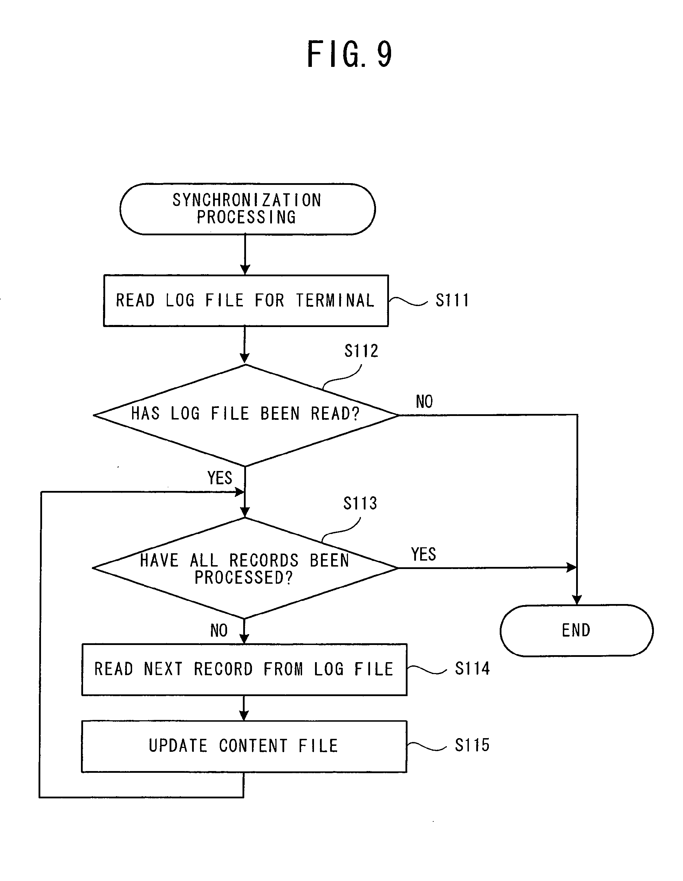

Next, synchronization processing in the PC 9 will be explained with reference to FIG. 9. The synchronization processing is started when a command to perform processing that synchronizes with the content display device is issued in a provision program that is being executed in the PC 9 and it is confirmed that the PC 9 is connected to the content display device 1.

First, the log file for the PC 9 is read from the log file storage area 143 of the connected content display device 1 and stored in the RAM 902 (S111). Note that the PC ID for the PC 9 is stored in the other information storage area 924 of the hard disk unit 920, and the log file that has a file name including the PC ID is read as the log file for the PC 9. Next, a determination is made as to whether the log file for the PC 9 exists in the log file storage area 143 of the connected content display device 1 and has been read (S 112). If the log file has not been read (NO at S 112), no history exists to be synchronized, that is, no modification has been made to the content file, so the synchronization processing ends.

On the other hand, in a case where the log file has been read (YES at S 112), a determination is made as to whether all of the records have been processed (S113). If not all of the records have been read, the processing has not been performed for all of the records (NO at S 113), and so the next record is read (S 114). At this point, the first record is read. Next, the content file that is stored in the content file storage area 921 of the hard disk unit 920 of the PC 9 is updated based on a history that is indicated by the read record (S115). Specifically, in the content file whose document ID is stored in the document ID data item in the log file, the value of the data item that is indicated by the information that is stored in the type data item is overwritten with the information in the description data item. The processing then returns to step S 113.

Next, the determination is made as to whether all of the records have been processed (S113). If an unread record remains (NO at S113), the next record is read (S114), and the content file is updated (S115). The processing then returns to step S 113. The processing at steps S 113 to S 115 is performed repeatedly in this manner, and when the processing has been completed for all of the records (YES at S 113), the synchronization processing ends.

As described above, in a case where the content file has been modified in the content display device 1, a log file is created for each of the acquisition source PCs. Then, by connecting to the content display device 1 and performing the synchronization processing based on the log file, the PC 9 can synchronize the content file in the PC 9 with the content file in the content display device 1. Therefore, even if the content display device 1 acquires the content files from a plurality of the PCs 9, it is possible to synchronize the content files with the corresponding PCs 9.

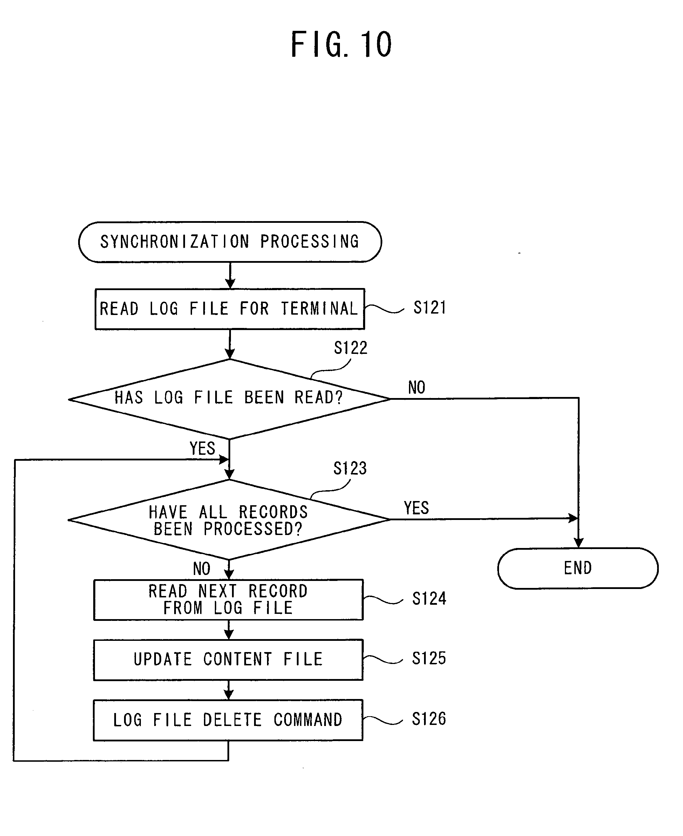

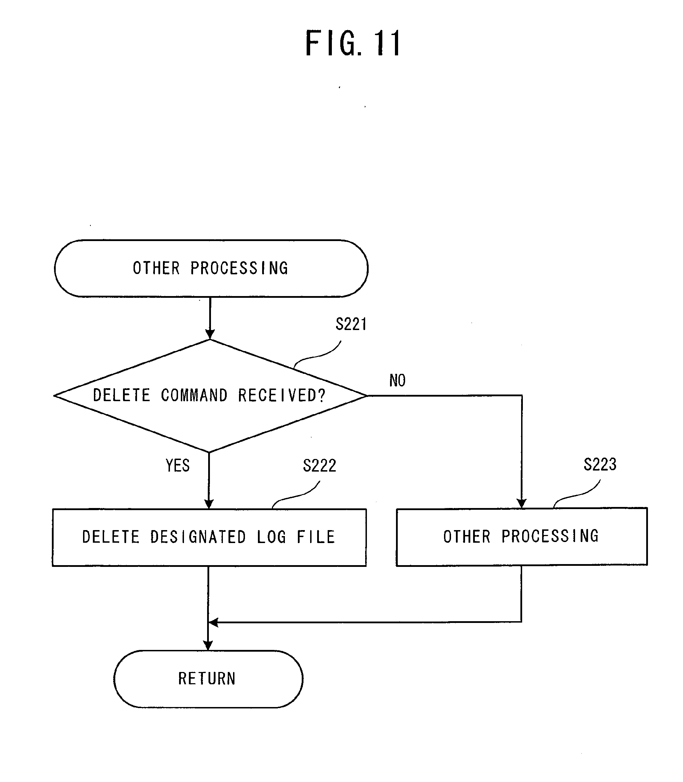

Next, the second embodiment will be explained with reference to FIGS. 10 and 11. When the PC 9 is connected to the content display device 1, the PC 9 acquires the corresponding log file, and in addition to updating the attribute information in the content file of the PC 9, as in the case of the first embodiment, in the second embodiment, the PC 9 issues a command to the content display device 1 to delete the log file. The log file in question is then deleted from the content display device 1 in accordance with the delete command. Only the portions of the second embodiment that differ from the first embodiment will be explained below.

As shown in FIG. 10, in the synchronization processing of the second embodiment, in the same manner as in the first embodiment, first, the log file for the PC 9 is read from the log file storage area 143 of the connected content display device 1 and stored in the RAM 902 (S 121). Next, a determination is made as to whether the log file for the PC 9 exists in the log file storage area 143 of the connected content display device 1 and has been read (S122). If the log file has not been read (NO at S122), the synchronization processing ends.

On the other hand, in a case where the log file has been read (YES at S122), a determination is made as to whether all of the records have been processed (S123). If not all of the records have been read, a determination is made that the processing has not been performed for all of the records (NO at S123), so the next record is read (S124). Next, the content file that is stored in the content file storage area 921 of the hard disk unit 920 of the PC 9 is updated based on the history that is indicated by the read record (S125). Specifically, in the content file whose document ID is stored in the document ID data item in the log file, the value of the data item that is indicated by the information that is stored in the type data item is overwritten with the information in the description data item. Next, in the second embodiment, a command to delete the log file for the PC 9 is transmitted to the connected content display device 1 (S126). The command indicates which log file should be deleted by appending the PC ID for the PC 9 to a command to delete the log file. The processing then returns to step S123.

Next, the determination is made as to whether all of the records have been processed (S123). If an unread record remains (NO at S123), the next record is read (S124), and the updating of the content file is performed (S125). Then the command to delete the log file for the PC 9 is transmitted to the connected content display device 1 (S126), and the processing returns to step S123. The processing at steps S123 to S126 is performed repeatedly in this manner, and when the processing has been completed for all of the records (YES at S123), the synchronization processing ends.

In the other processing (S16) in the display device processing, the processing that is shown in FIG. 11 is performed in the content display device 1. As shown in FIG. 11, first, a determination is made as to whether the log file delete command has been received from the PC 9 (S221). If the delete command has been received (YES at S221), the log file with the designated PC ID is deleted from the log file storage area 143 (S222). The processing then returns to the display device processing. If the delete command has not been received (NO at S221), other processing is performed (S223), and the processing returns to the display device processing.

As described above, in a case where the content file has been updated in the content display device 1, a log file is created for each of the acquisition source PCs. Then, by connecting to the content display device 1 and performing the synchronization processing based on the log file, the PC 9 can synchronize the content file in the PC 9 with the content file in the content display device 1. Therefore, even if the content display device 1 acquires the content files from a plurality of the PCs 9, it is possible to synchronize the content files with the corresponding PCs 9. In addition, the PC 9 issues the command to delete the log file in the content display device 1 after the synchronization processing is performed, and the log file is deleted from the content display device 1, so the log files that have become unnecessary do not accumulate to consume extra storage capacity. Furthermore, unnecessary repeating of the synchronization processing is not performed for the history for which the synchronization processing has already been performed.

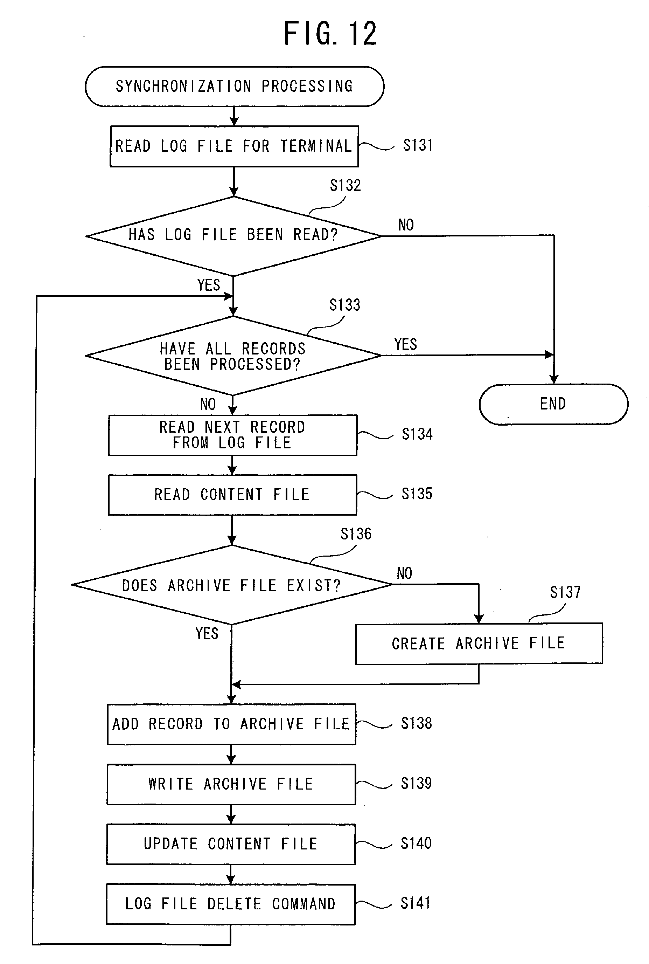

Next, the third embodiment will be explained with reference to FIGS. 12 to 14. In the first embodiment, when the PC 9 is connected to the content display device 1, the PC 9 acquires the corresponding log file and updates the attribute information in the content file stored in the PC 9. In the second embodiment, the command to delete the log file is also issued to the content display device 1. In the third embodiment, the undo processing is also performed. That is, in a case where the attribute information has been updated, it is possible to restore the updated information to its prior state. In order to do this, the archive file for restoring the updated attribute information to its prior state is created. Only the portions of the third embodiment that differ from the first embodiment and the second embodiment will be explained below.

As shown in FIG. 12, in the synchronization processing of the second embodiment, in the same manner as in the first embodiment, first, the log file for the PC 9 is read from the log file storage area 143 of the connected content display device 1 and stored in the RAM 902 (S131). Next, a determination is made as to whether the log file for the PC 9 exists in the log file storage area 143 of the connected content display device 1 and has been read (S 132). If the log file has not been read (NO at S 132), the synchronization processing ends.

On the other hand, in a case where the log file has been read (YES at S132), a determination is made as to whether all of the records have been processed (S 133). If not all of the records have been read, a determination is made that the processing has not been performed for all of the records (NO at S133), so the next record is read (S134). In the third embodiment, the archive file will be created, so the content file that has the document ID that is stored in the document ID data item of the record of the log file that was read at step S 134 is read from the content file storage area 921 (S135). Next, a determination is made as to whether the archive file exists, according to whether the archive file is stored in the archive file storage area 922 (S 136). If the archive file does not exist (NO at S 136), the archive file is created (S137). If the archive file does exist (YES at S136), it is not necessary to create a new one. The archive file is the file for restoring the updated content file to its prior state. The data items that are provided in the archive file include a document ID in which is stored the document ID for identifying the content file, a type in which is stored information that indicates the data item that is to be modified, and a description in which is stored the information that is in the data item to be modified before modification is made.

Next, one record is added to the archive file (S 138). The document ID that is stored in the document ID data item in the log file is stored in the document ID data item in the archive file, and the information that is stored in the type data item in the log file is stored in the type data item in the archive file. In addition, the information that is stored in the content file that was read at S 139, in the data item indicated by the type data item in the log file, is stored in the description data item in the archive file (S 139).

Next, in the same manner as in the first embodiment and the second embodiment, the content file that is stored in the content file storage area 921 of the hard disk unit 920 of the PC 9 is updated based on the history that is indicated by the read record (S 140). Specifically, in the content file whose document ID is stored in the document ID data item in the log file, the value of the data item that is indicated by the information that is stored in the type data item is overwritten with the information in the description data item. Next, in the same manner as in the second embodiment, the command to delete the log file for the PC 9 is transmitted to the connected content display device 1 (S141). The command indicates which log file should be deleted by appending the PC ID for the PC 9 to the command to delete the log file. The processing then returns to step S 133.

Next, the determination is made as to whether all of the records have been processed (S133). If an unread record remains (NO at S 133), the next record is read (S 134). The archive file exists (YES at S 137), so one record is added to the archive file (S 138), and the information is stored in the archive file (S 139). Then the updating of the content file is performed (S140), and the command to delete the log file for the PC 9 is transmitted to the connected content display device 1 (S141). The processing then returns to step S 133. The processing at steps S133 to S141 is performed repeatedly in this manner, and when the processing has been completed for all of the records (YES at S 133), the synchronization processing ends.

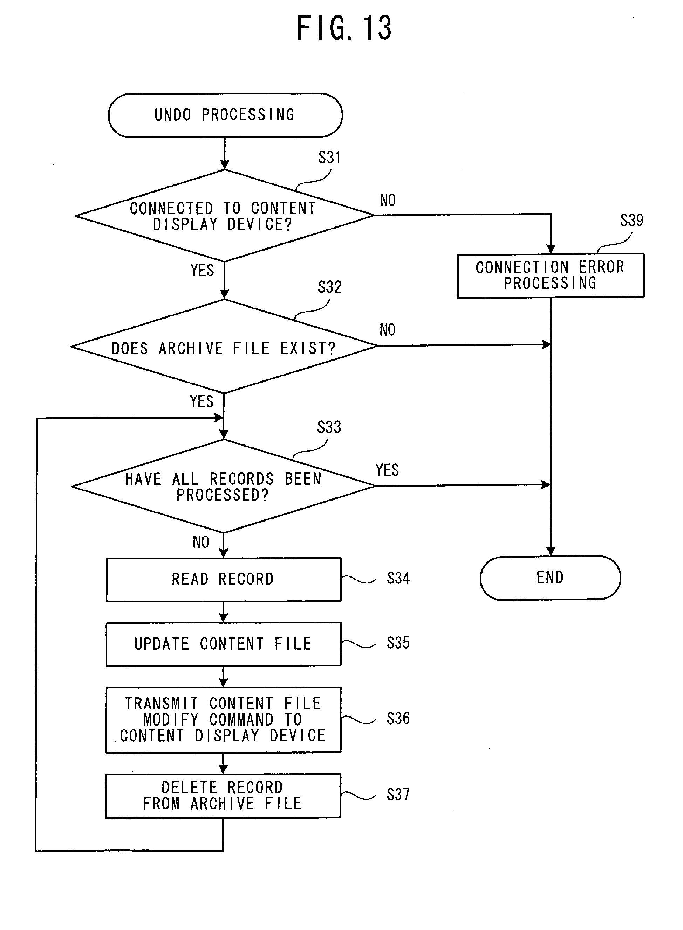

Next, the undo processing will be explained with reference to FIG. 13. The undo processing is started when a command to perform the undo processing is issued in the provision program that is being executed in the PC 9 and it is confirmed that the PC 9 is connected to the content display device 1. The undo processing command may be enabled, for example, by displaying an Undo button on the menu selection screen that is displayed on the display 912 and by displaying an Undo menu among selectable menus in a menu bar. In these cases, the user's selecting of the Undo button or the Undo menu by one of a key operation and an operation of the mouse 911 may be treated as the issuing of the undo command.

As shown in FIG. 13, in the undo processing, first, a determination is made as to whether the PC 9 is connected to the content display device 1 (S31). If the PC 9 is not connected to the content display device 1 (NO at S31), the undo processing cannot be performed, so an error message saying that the content display device 1 is not connected is displayed on the display 912 (S39), and the undo processing ends.

On the other hand, if the PC 9 is connected to the content display device 1 (YES at S31), a determination is made as to whether the archive file exists, according to whether he archive file is stored in the archive file storage area 922 (S32). If the archive file does not exist (NO at S32), there is no content file update to be undone, so the undo processing ends at this point.

If the archive file does exist (YES at S32), a determination is made as to whether all of the records have been processed, according to whether there are any record to be read (S33). If there is a record to be read, not all of the records have been processed (NO at S33), so the most recent record is read from the archive file (S34). Next, the content file that has the document ID that is stored in the document ID data item in the archive file is read from the content file storage area 921. In the content file, the information in the data item that is indicated by the type data item in the archive file is updated with the information that is stored in the description data item in the archive file (S35). A command to modify the data in the content file in the content display device 1 is then transmitted to the content display device 1 (S36). The command indicates which data item in which content file should be modified by appending the document ID, information that indicates the data item to be modified, and the information with which the data item will be modified to a command to modify the content file. Next, the record that was read from the archive file at step S34 is deleted as a processed record (S37). The processing then returns to step S33.

At step S33, a determination is made as to whether all of the records have been processed (S33). If there is a record to be read, not all of the records have been processed (NO at S33), so the next most recent record is read from the archive file (S34). Then the archive file is updated (S35). The command to modify the data in the content file is then transmitted to the content display device 1 (S36). The record that was read from the archive file at step S34 is deleted as the processed record (S37). The processing then returns to step S33. The processing at steps S33 to S37 is performed repeatedly in this manner, and when all of the records have been deleted, no records remain to be read, and the processing has been completed for all of the records (YES at S33), the undo processing ends.

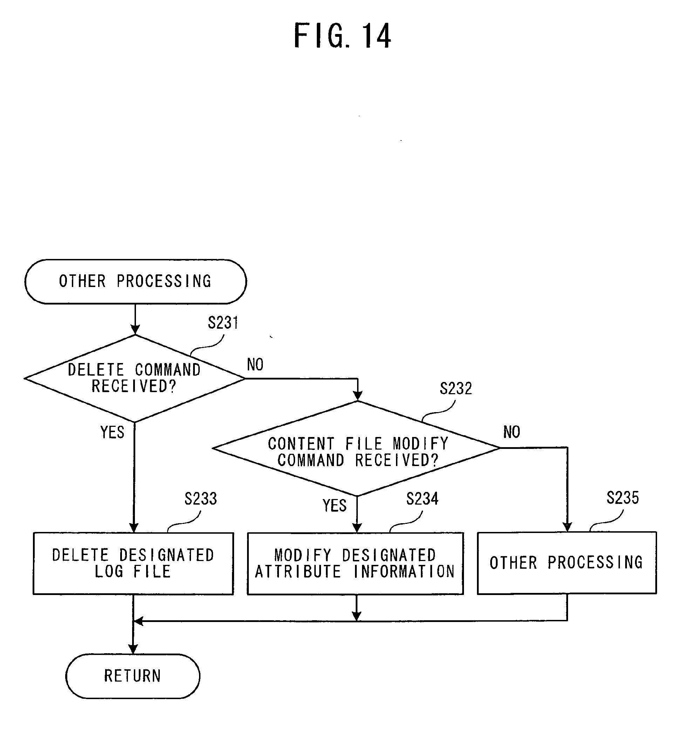

In the other processing (S 16) in the display device processing, the processing that is shown in FIG. 14 is performed in the content display device 1. As shown in FIG. 14, first, a determination is made as to whether the delete command for the log file has been received from the PC 9 (S231). If the delete command has been received (YES at S231), the log file with the designated PC ID is deleted from the log file storage area 143 (S233). The processing then returns to the display device processing. If the delete command has not been received (NO at S231), a determination is made as to whether the content file modify command has been received from the PC 9 (S232). If the content file modify command has been received (YES at S232), the data in the designated data item in the content file that has the designated document ID is changed to the designated information (S234). The processing then returns to the display device processing. If the content file modify command has not been received (NO at S232), other processing is performed (S235), and the processing returns to the display device processing.

As described above, in a case where the content file has been updated in the content display device 1, a log file is created for each of the acquisition source PCs. Then, by connecting to the content display device 1 and performing the synchronization processing based on the log file, the PC 9 can synchronize the content file in the PC 9 with the content file in the content display device 1. In addition, the PC 9 issues the command to delete the log file in the content display device 1 after the synchronization processing is performed, and the log file is deleted from the content display device 1, so the log files that have become unnecessary do not accumulate to consume extra storage capacity. Furthermore, unnecessary repeating of the synchronization processing is not performed for the history for which the synchronization processing has already been performed. The undo processing can also be performed in the PC 9, and both the content file in the PC 9 and the content file in the content display device 1 can be restored, so it is possible to keep the content files synchronized.

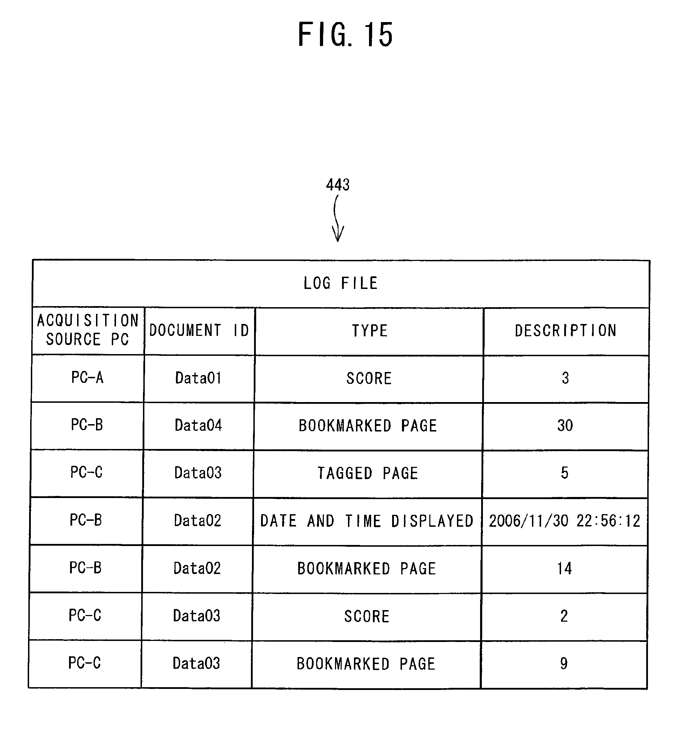

Next, the fourth embodiment will be explained with reference to FIGS. 15 to 17. In the fourth embodiment, in the same manner as in the first embodiment, when the PC 9 is connected to the content display device 1, the PC 9 acquires the corresponding log file and updates the attribute information in the content file stored in the PC 9. On the other hand, in the fourth embodiment, a single log file is created in the content display device 1, instead of creating one log file for each acquisition source PC.

As shown in FIG. 15, the data items that are stored in a log file 443 in the fourth embodiment include an acquisition source PC, a document ID, a type, and a description. The PC ID that indicates the PC 9 (the acquisition source PC) from which the content file whose data has been modified was acquired is stored in the acquisition source PC data item. The document ID that indicates the content file whose data has been modified is stored in the document ID data item. The information that indicates the data item whose data has been modified is stored in the type data item. The modified information in the data item whose data has been modified is stored in the description data item.

In the example that is shown in FIG. 15, the score has been changed to "3" for the document ID "Data01" in the acquisition source PC "PC-A", and the bookmarked page has been changed to "10" for the document ID "Data01" in the acquisition source PC "PC-A". In addition, the bookmarked page has been changed to "30" for the document ID "Data04" of the acquisition source PC "PC-B", and the date and time displayed has been changed to "2006/11/30 22:56:12" for the document ID "Data02" of the acquisition source PC "PC-B". The bookmarked page has also been changed to "14" for the document ID "Data02" of the acquisition source PC "PC-B". The tagged page has been changed to "5" for the document ID "Data03" of the acquisition source PC "PC-C". The score has been changed to "2" for the document ID "Data03" in the acquisition source PC "PC-C". The bookmarked page has been changed to "9" for the document ID "Data03" in the acquisition source PC "PC-C".

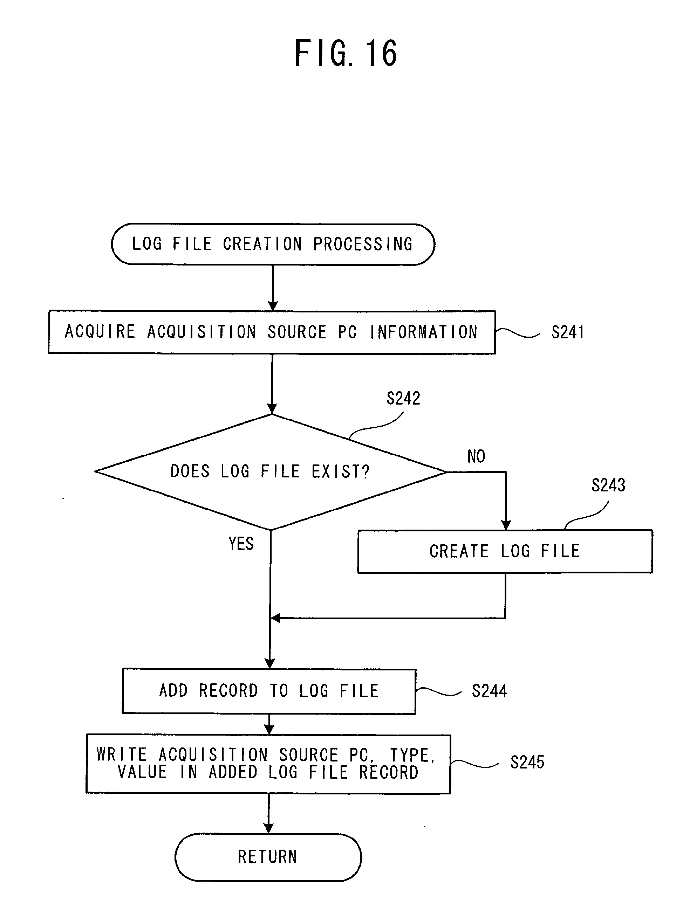

Next, the log file creation processing that is performed in the content display device 1 in the fourth embodiment will be explained with reference to FIG. 16. In the log file creation processing, first, in the same manner as in the first embodiment, the information about which PC is the acquisition source PC is acquired and stored in the acquisition source PC storage area 131 of the RAM 13 (S241).

Next, a determination is made as to whether the log file 443 exists in the log file storage area 143 (S242). If the log file 443 does not exist (NO at S242), the log file 443 is created in the log file storage area 143 (S243). If the log file 443 does exist (YES at S242), there is no need to create a new log file, and the new log file is not created.

Next, one record is added to the log file 443 (S244). The PC ID that is stored in the acquisition source PC storage area 131 is stored in the acquisition source PC data item of the added record. The document ID that is stored in the target content storage area 134 is stored in the document ID data item. Information that indicates the data item that has been stored in the modified data item storage area 132 is stored in the type data item. The information that is stored in the modified data storage area 133 is stored in the description data item (S245). Then the log file creation processing ends, and the processing returns to the display device processing.

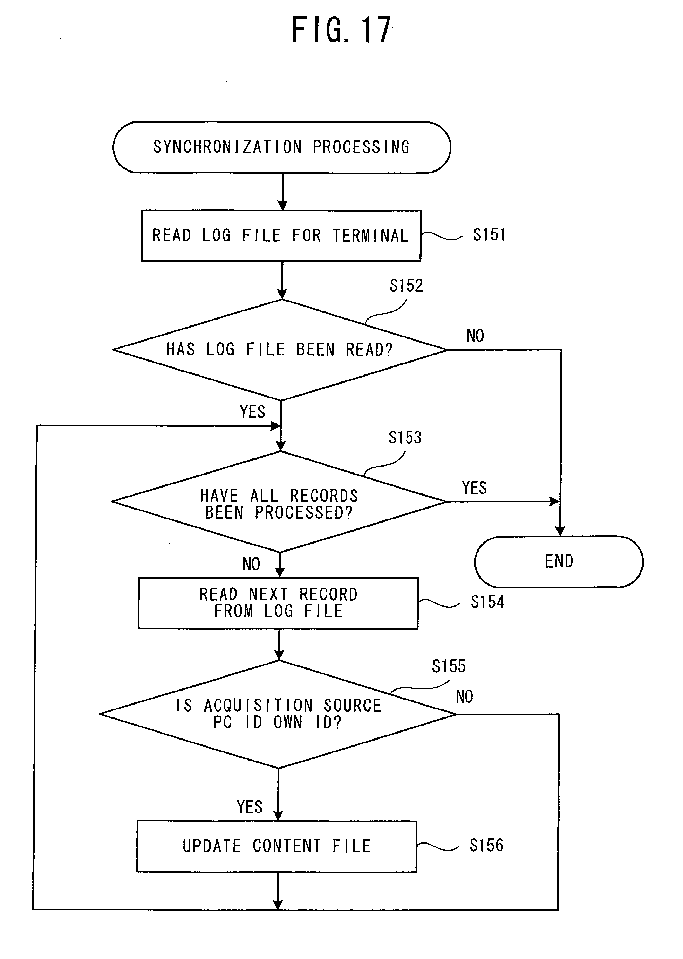

Next, the synchronization processing that is performed in the PC 9 in the fourth embodiment will be explained with reference to FIG. 17.

First, the log file 44 is read from the log file storage area 143 of the connected content display device 1 and stored in the RAM 902 (S151). Next, a determination is made as to whether the log file 443 has been read (S 152). If the log file has not been read (NO at S 152), no history exists to be synchronized, that is, no modification has been made to the content file, so the synchronization processing ends.

On the other hand, in a case where the log file 44 has been read (YES at S 152), a determination is made as to whether all of the records have been processed (S 153). If not all of the records have been read, the processing has not been performed for all of the records (NO at S 153), so the next record is read (S 154). Next, a determination is made as to whether the PC ID in the acquisition source PC data item of the read record indicates the PC 9 itself (S 155). The PC ID of the PC 9 is stored in the other information storage area 924 of the hard disk unit 920 and is compared to the PC ID in the acquisition source PC data item. If the PC ID that is stored in the acquisition source PC data item is not the same as the PC ID of the PC 9 (NO at S 155), there is no need to perform the processing in relation to the history for the record, so the processing returns to step S 153.

On the other hand, in a case where the PC ID that is stored in the acquisition source PC data item is the same as the PC ID of the PC 9 (YES at S 155), it is necessary to update the content file. Accordingly, the content file that is stored in the content file storage area 921 of the hard disk unit 920 of the PC 9 is updated based on the history that is indicated by the read record (S156). Specifically, in the content file whose document ID is stored in the document ID data item in the log file, the value of the data item that is indicated by the information that is stored in the type data item is overwritten with the information in the description data item. The processing then returns to step S 153.

Next, the determination is made as to whether all of the records have been processed (S153). If an unread record remains (NO at S153), the next record is read (S154), and in the case where the PC ID that is stored in the acquisition source PC data item is the same as the PC ID of the PC 9 (YES at S155), the updating of the content file is performed (S 156). The processing then returns to step S153. The processing at steps S153 to S156 is performed repeatedly in this manner, and when the processing has been completed for all of the records (YES at S153), the synchronization processing ends.

As described above, in a case where the content file has been modified in the content display device 1, a log file is created. Then, by connecting to the content display device 1 and performing the synchronization processing based only on the history for the records in the log file that pertain to the PC 9, the PC 9 can synchronize the content file in the PC 9 with the content file in the content display device 1.

Note that the data synchronizing system of the present disclosure is not limited to the embodiments described above, and it is obvious that various types of modifications may be made insofar as they do not depart from the scope of the present disclosure. In the embodiments described above, the acquiring terminal is the content display device 1, and the content is document data that contains text characters and and/or a still image, but the acquiring terminal and the content are obviously not limited to these examples. For example, the content may include not only document data, but also image data. Further, the acquiring terminal may also be a music player, and the content may also be music data. The acquiring terminal may also be a terminal on which one can view videos, and the content may also be video data. The content may also be document data, image data, music data, and video data, and a composite type of terminal device that is capable of playing back all of these types of data may be used as the acquiring terminal. Furthermore, in the embodiments described above, the attribute information for the content file is modified, but it is obvious that what may be modified is not only the attribute information, but also the title and the document data of the content.

In the fourth embodiment described above, the command to delete the log file in the content display device 1 may also be issued. In that case, in the same manner as in the second embodiment and the third embodiment, the PC 9 may also append its PC ID to the command to delete the log file and transmit the command to the content display device 1. Then, in the content display device 1, the record for which the acquisition source PC has the PC ID that is appended to the command may be deleted from the log file 443.

In the fourth embodiment, the archive file may also be created in the PC 9, as it is in the third embodiment, and the data that has been modified in the content file by the synchronization processing may also be restored. In that case, the processing at steps S 135 to S139 in the synchronization processing for the third embodiment that is shown in FIG. 12 may be inserted into the synchronization processing that is shown in FIG. 17, before step S 156. The undo processing that is shown in FIG. 13 may also be performed. In the content display device 1, when the content file modify command is received, the data in the designated data item in the content file that has the designated document ID may also be changed to the designated information.

In the data synchronizing system of the present disclosure, first connecting means of the acquiring terminal connects to the providing terminals, and acquiring means can acquire a file from the providing terminals connected by the first connecting means. First file storing means can store the files that the acquiring means has acquired. Data modify command means issues a command to modify a data item in a file that is stored in the first file storing means, and first data modifying means can modify the data item in the file that is stored in the file storing means, based on the modify command from the data modify command means. Modification history storing means can store modification histories of modifications of the data items made by the first data modifying means in a state that acquisition source providing terminals, which are acquisition sources of the respective files stored in the first file storing means, are identifiable. Second connecting means of the providing terminal can connect to the acquiring terminal, and second file storing means can store files. When the providing terminal is connected to the acquiring terminal by the second connecting means, corresponding file history acquiring means can acquire, from among the modification histories stored in the modification history storing means, at least a corresponding file history that is a modification history for a file for which the acquisition source providing terminal is the providing terminal. Second data modifying means can modify data in the file that is stored in the second file storing means, based on the corresponding file history that has been acquired by the corresponding file history acquiring means. Therefore, when the data item that has been modified in the acquiring terminal is reflected in the providing terminal, it is possible for the providing terminal to identify which file is file data that the providing terminal itself has provided and to identify a history of a modification to the data item, even if the acquiring terminal has acquired a plurality of files from a plurality of the providing terminals. Accordingly, even if the acquiring terminal has acquired the files from the providing terminals, it is possible to synchronize the files in the acquiring terminal with the files in the respective providing terminals. Furthermore, it is not necessary for the providing terminal to compare all of the files that are stored in the acquiring terminal to the files that are stored in the providing terminal in order to determine which file is the file the providing terminal itself has provided. It is also not necessary for the providing terminal to determine which individual data items have been modified or not. Accordingly, a heavy load is not imposed on the providing terminal.

In the data synchronizing system of the present disclosure, after the corresponding file history has been acquired by the corresponding file history acquiring means, delete command transmitting means in the providing terminal can transmit to the acquiring terminal a delete command that instructs the acquiring terminal to delete a modification history that is stored in the modification history storing means. In a case where the delete command has been transmitted from the delete command transmitting means, first deleting means in the acquiring terminal can delete from the modification history storing means the modification history for which the acquisition source providing terminal is the providing terminal that transmitted the delete command. Therefore, the modification histories do not continue to accumulate in the acquiring terminal, and the modification histories that have become unnecessary are deleted, and so extra storage capacity are not consumed in the acquiring terminal.

In the data synchronizing system of the present disclosure, information as to whether the content has been used, a date and time when the content was used, an evaluation of the content, tagging information, and bookmark information can be managed even in the providing terminal.

In an acquiring terminal of the present disclosure, first connecting means connects to a providing terminal, and acquiring means can acquire a file that is stored in the providing terminal connected to the providing terminal by the first connecting means. First file storing means can store files that the acquiring means has acquired. Data modify command means issues a command to modify a data item in the file that is stored in the first file storing means, and first data modifying means can modify the data item in the file that is stored in the first file storing means, based on the modify command from the data modify command means. Modification history storing means can store, as modification histories, histories of modifications in the file stored in the first file storing means that have been modified by the first data modifying means. Each of the modification histories stored in the modification history storing means can be configured such that the acquisition source providing terminal, which is an acquisition source of the file, can be identified. Therefore, because the modification histories exist, when the data item that has been modified in the acquiring terminal is reflected in the providing terminal, it is not necessary to determine individually which data item has been modified. In addition, the modification history can identify the providing terminal from which the file was provided, so the files can be managed even if the files have been acquired from a plurality of the providing terminals. Furthermore, it is not necessary for the providing terminal to compare all of the files that are stored in the acquiring terminal to the files that are stored in the providing terminal in order to determine which file is the file the providing terminal itself has provided, so a heavy load is not imposed on the providing terminal.

The acquiring terminal of the present disclosure can cause information as to whether the content has been used, a date and time when the content was used, an evaluation of the content, tagging information, and bookmark information to be managed even in the providing terminal.

In the acquiring terminal of the present disclosure, the modification histories can be stored in the modification history storing means in a configuration of one file for each of the acquisition source providing terminals. Therefore, because the modification histories are grouped according to the acquisition source providing terminal, the modification histories can be managed easily even if a plurality of files has been acquired from a plurality of the providing terminals. Further, when the data item that has been modified in the acquiring terminal is reflected in the providing terminal, the providing terminal can easily identify the modification histories for the files that it has provided, so a heavy load is not imposed on the providing terminal.

In the acquiring terminal of the present disclosure, in a case where a delete command that orders deletion of a modification history that is stored in the modification history storing means has been transmitted from the providing terminal, the modification history for which the acquisition source providing terminal is the providing terminal that transmitted the delete command can be deleted from the modification history storing means. Therefore, in response to the modification history delete command from the providing terminal, the corresponding modification history can be easily deleted.

In the acquiring terminal of the present disclosure, each of the modification histories can include, as one of the data items, acquiring terminal identifying information that identifies the acquisition source providing terminal. Therefore, referring to the acquiring terminal identifying information makes it possible to determine the providing terminal from which the file to which the modification history applies was acquired, so the modification histories can be managed easily even if a plurality of files has been acquired from a plurality of the providing terminals. Further, when data item that has been modified in the acquiring terminal is reflected in the providing terminal, the providing terminal can easily identify the modification history for the file that the providing terminal has provided, so a heavy load is not imposed on the providing terminal.

In the acquiring terminal of the present disclosure, in a case where a delete command that orders deletion of a modification history that is stored in the modification history storing means has been transmitted from the providing terminal, the modification history for which the acquisition source providing terminal is the providing terminal that transmitted the delete command can be deleted from the modification history storing means. Therefore, in response to the modification history delete command from the providing terminal, the corresponding modification history can be easily deleted by referring to the acquiring terminal identifying information.

In a providing terminal of the present disclosure, second connecting means can connect to an acquiring terminal, and second file storing means can store files that will be provided to the acquiring terminal. When the providing terminal is connected to the acquiring terminal by the second connecting means, corresponding file history acquiring means can acquire, from among the modification histories that are stored in the modification history storing means, at least a corresponding file history that is a modification history for the file for which the acquisition source providing terminal is the providing terminal. Second data modifying means can modify the data item in the file that is stored in the second file storing means, based on the corresponding file history that has been acquired by the corresponding file history acquiring means. Therefore, when the data item that has been modified in the acquiring terminal is reflected in the providing terminal, it is possible for the providing terminal to identify which file is a file that the providing terminal itself has provided and to identify the history of the modification to the data item, even if the acquiring terminal has acquired a plurality of files from a plurality of the providing terminals. Accordingly, it is not necessary for the providing terminal to compare all of the files that are stored in the acquiring terminal to the files that are stored in the providing terminal in order to determine which file is a file the providing terminal has provided. It is also not necessary for the providing terminal to determine individually which data item has been modified. Accordingly, a heavy load is not imposed on the providing terminal.

In the providing terminal of the present disclosure, after the corresponding file history has been acquired by the corresponding file history acquiring means, a delete command that orders deletion of a modification history that is stored in the modification history storing means can be transmitted to the acquiring terminal. Therefore, after the data modification in the acquiring terminal is reflected in the file in the providing terminal, the command to delete the modification history can be applied to the acquired information, so if the modification history is deleted based on the delete command in the acquiring terminal, extra storage capacity can will not be consumed in the acquiring terminal.

In the providing terminal of the present disclosure, before the data item in the file that is stored in the second file storing means is modified by the second data modifying means, restoration information storage means can store restoration information that is information that includes at least the data item in the files stored in the second file storing means, such that the order in which the data item was modified can be identified. Restoration command means can issue a command to restore a value in the data item in the files that is stored in the second file storing means and that has been modified by the second data modifying means to a value that was stored before modification. When the restoration command has been issued by the restoration command means, restoring means can restore the value in the data item in the file that is stored in the second file storing means to the value before modifications was made by the second data modifying means, based on the restoration information that is stored in the restoration information storage means. This enhances convenience, because the value in the data item can be restored to the value before modification, in a case where a user does not wish to modify the data item in the providing terminal to match the data item in the acquiring terminal.

In the providing terminal of the present disclosure, information as to whether the content has been used, a date and time when the content was used, an evaluation of the content, tagging information, and bookmark information can be managed even in the providing terminal.

## Claims

1. A data synchronizing system that comprises providing terminals and an acquiring terminal, the providing terminals storing files that each include data items and the acquiring terminal connecting to the providing terminals and acquiring files stored in the providing terminals, the data synchronizing system being **characterized by** synchronizing data items in each file between the providing terminals and the acquiring terminal,
wherein the acquiring terminal includes:
first connecting means for connecting to one of the providing terminals;
acquiring means for acquiring a file from one of the providing terminals to which the acquiring terminal is connected by the first connecting means;
first file storing means for storing the files that have each been acquired by the acquiring means;
data modify command means for issuing a command to modify a data item in one of the files stored in the first file storing means;
first data modifying means for modifying the data item in one of the files stored in the first file storing means, based on the command issued by the data modify command means; and
modification history storing means for storing modification histories of modifications that have each been made to the data item by the first data modifying means, in such a state that acquisition source providing terminals are identifiable, the acquisition source providing terminals being acquisition sources of the respective files stored in the first file storing means,
and
each of the providing terminals includes:
second connecting means for connecting to the acquiring terminal;
second file storing means for storing the files;
corresponding file history acquiring means for acquiring at least a corresponding file history from among the modification histories stored in the modification history storing means, when the providing terminal is connected to the acquiring terminal by the second connecting means, the corresponding file history being a modification history for the file for which the acquisition source providing terminal is the providing terminal; and
second data modifying means for modifying the data item in the file stored in the second file storing means, based on the corresponding file history that has been acquired by the corresponding file history acquiring means.

2. The data synchronizing system according to claim 1,
wherein each of the providing terminals further includes delete command transmitting means for transmitting a delete command to delete a modification history stored in the modification history storing means to the acquiring terminal, after the corresponding file history has been acquired by the corresponding file history acquiring means, and
the acquiring terminal further includes first deleting means for deleting from the modification history storing means, in a case where the delete command has been transmitted from the delete command transmitting means, the modification history of which the acquisition source providing terminal is one of the providing terminals that transmitted the delete command.

3. The data synchronizing system according to either one of claims 1 and 2,
wherein the data items include any one of information as to whether content that is output by the acquiring terminal as one of an image, a video, and an audio has been used, a date and time when the content was used, an evaluation of the content, tagging information that specifies a designated position in the content, and bookmark information that, in a case where the content indicates sequential information, specifies a position of a boundary between the content that has been used and the content that has not been used.

4. An acquiring terminal that connects to providing terminals and acquires files from the providing terminals, the providing terminals each storing files each including data items, the acquiring terminal being **characterized by** comprising:
first connecting means for connecting to one of the providing terminals;
acquiring means for acquiring a file stored in one of the providing terminals to which the acquiring terminal is connected by the first connecting means;
first file storing means for storing the files that have each been acquired by the acquiring means;
data modify command means for issuing a command to modify a data item in one of the files stored in the first file storing means;
first data modifying means for modifying the data item stored in the first file storing means, based on the modify command issued by the data modify command means; and
modification history storing means for storing, as modification histories, histories of modifications that have each been made by the first data modifying means in the data item in the file stored in the first file storing means,
wherein each of the modification histories stored in the modification history storing means is configured such that an acquisition source providing terminal is identifiable, the acquisition source providing terminal being an acquisition source of the file.

5. The acquiring terminal according to claim 4,
wherein the data items include any one of information as to whether content that is output by the acquiring terminal as one of an image, a video, and an audio has been used, a date and time when the content was used, an evaluation of the content, tagging information that specifies a designated position in the content, and bookmark information that, in a case where the content indicates sequential information, specifies a position of a boundary between the content that has been used and the content that has not been used.

6. The acquiring terminal according to either one of claims 4 and 5,
wherein the modification histories are stored in the modification history storing means in a configuration of one file for each of the acquisition source providing terminals.

7. The acquiring terminal according to claim 6, further comprising:
first deleting means for deleting from the modification history storing means, in a case where a delete command to delete a modification history stored in the modification history storing means has been transmitted from one of the providing terminals, the file of the modification history for which the acquisition source providing terminal is one of the providing terminals that transmitted the delete command.

8. The acquiring terminal according to either one of claims 4 and 5,
wherein each of the modification histories includes, as one of the data items, acquiring terminal identifying information that identifies the acquisition source providing terminal.

9. The acquiring terminal according to claim 8, further comprising:
second deleting means for deleting from the modification history storing means, in a case where a delete command to delete a modification history stored in the modification history storing means has been transmitted from one of the providing terminals, the modification history for which the acquisition source providing terminal is one of the providing terminal that transmitted the delete command.

10. An acquisition program that causes a computer to function as each type of processing means of the acquiring terminal according to any one of claims 4 to 9.

11. providing terminals that each stores files to be provided to a connected terminal, the files each including data items,
wherein an acquiring terminal includes modification history storing means for storing histories of modifications that have each been made to a file that has been provided by one of the providing terminals as modification histories that are configured such that acquisition source providing terminals for the respective modification histories are identifiable, the acquiring terminal being a terminal that connects to one of the providing terminals and that acquires a file, the acquisition source providing terminals being acquisition sources of the respective files,
and
each of the providing terminals includes:
second connecting means for connecting to the acquiring terminal;
second file storing means for storing the files to be provided to the acquiring terminal;
corresponding file history acquiring means for acquiring at least a corresponding file history from among modification histories stored in the modification history storing means, when the providing terminal is connected to the acquiring terminal by the second connecting means, the corresponding file history being a modification history for the file for which the acquisition source providing terminal is the providing terminal; and
second data modifying means for modifying the data item in the file stored in the second file storing means, based on the corresponding file history that has been acquired by the corresponding file history acquiring means.

12. The providing terminals according to claim 11, each of the providing terminals further comprising:
delete command transmitting means for transmitting a delete command to delete a modification history stored in the modification history storing means to the acquiring terminal, after the corresponding file history has been acquired by the corresponding file history acquiring means.

13. The providing terminals according to either one of claims 11 and 12, each of the providing terminals further comprising:
restoration information storage means for storing restoration information that includes at least the data item that was stored in the second file storing means before the data item in the file stored in the second file storing means was modified by the second data modifying means, such that the order in which the data item was modified is identifiable;
restoration command means for issuing a command to restore a value in the data item in the file that is stored in the second file storing means and that has been modified by the second data modifying means to a value that was stored before modification; and
restoring means for restoring the value in the data item in the file that is stored in the second file storing means to the value before modification was made by the second data modifying means, based on the restoration information stored in the restoration information storage means, when the restoration command has been issued by the restoration command means.

14. The providing terminals according to any one of claims 11 to 13,
wherein the data items include any one of information as to whether content that is output by the acquiring terminal as one of an image, a video, and an audio has been used, a date and time when the content was used, an evaluation of the content, tagging information that specifies a designated position in the content, and bookmark information that, in a case where the content indicates sequential information, specifies a position of a boundary between the content that has been used and the content that has not been used.

15. A provision program that causes a computer to function as each type of processing means of the providing terminals according to any one of claims 11 to 14.
